# EUROPÄISCHE PATENTSCHRIFT

(11) **EP 3 512 050 B1**
(45) Veröffentlichungstag und Bekanntmachung des Hinweises auf die Patenterteilung: **11.01.2023**
(21) Anmeldenummer: 18020556.9
(22) Anmeldetag: 26.10.2018
(51) Int. Cl.: H01R 13/506, H01R 31/06, H01R 13/629

(54) **LANDSEITIGER ELEKTROFAHRZEUG-LADESTECKER**
LAND-BASED ELECTRIC VEHICLE CHARGING PLUG
FICHE TERRESTRE POUR LE CHARGEMENT DE VÉHICULE ÉLECTRIQUE

(30) Priorität: 16.01.2018 DE 102018100825
(43) Veröffentlichungstag der Anmeldung: 17.07.2019
(73) Patentinhaber: Dr. Ing. h.c. F. Porsche AG, 70435 Stuttgart (DE)
(72) Erfinder: Götz, Stefan, 85659 Forstern (DE); Rönfanz, Jari, 75417 Mühlacker (DE); Reber, Volker, 74544 Michelbach an der Bilz (DE)

(56) Entgegenhaltungen:
- WO-A1-2014/144990
- WO-A1-2016/119000
- CN-A- 106 532 339
- DE-A1-102011 082 092
- DE-B3-102015 002 703
- DE-T5-112014 004 814

## Beschreibung

Die Erfindung bezieht sich auf einen landseitigen Elektrofahrzeug-Ladestecker, der zum Aufladen einer fahrzeugseitigen Traktionsbatterie in einen fahrzeugseitigen Ladestecker einsteckbar ist.

Der landseitige Elektrofahrzeug-Ladestecker ist Teil einer landseitigen Ladestation zum Aufladen einer Traktionsbatterie eines Elektrofahrzeugs. Im Gegensatz zum fahrzeugseitigen Ladestecker ist der landseitige Ladestecker einem hohen Verschleiß ausgesetzt, da er mehrere 100-mal bis zu mehreren 1000-mal pro Jahr benutzt wird, also angekoppelt und abgekoppelt wird. Neben dem reinen Verschleiß der elektrischen Kontakte wird der Ladestecker im Übrigen auch mechanisch beansprucht und gegebenenfalls mechanisch beschädigt, beispielsweise durch Herunterfallen und Aufschlagen auf den Boden.

Die landseitigen Ladestecker werden daher in regelmäßigen Abständen ausgetauscht. Dies kann beispielsweise dadurch erfolgen, dass das gesamte Ladekabel einschließlich des daran befestigten landseitigen Ladesteckers ausgetauscht wird. Hierzu muss jedoch die Ladesäule geöffnet werden und das neue Ladekabel mit seinem ladesäulenseitigen Ende an die Ladesäule angeschlossen werden.

Alternativ werden an dem landseitigen Ladestecker nur die elektrischen Kontakte ausgetauscht. Hierzu müssen die korrespondierenden Leitungskabel entsprechend gekürzt werden, um an den gekürzten Kabelenden die neuen elektrischen Kontakte befestigen zu können, beispielsweise durch Löten oder Crimpen. Dieses Verfahren ist umständlich und sehr anfällig für eine mangelhafte Umsetzung, da die Qualität des auf diese Weise überarbeiteten Ladesteckers sehr von der Sorgfalt des Monteurs abhängig ist.

Aus CN 105896212 A ist ein landseitiger Elektrofahrzeug-Ladestecker bekannt, der mit einem Adapterstecker auf eine andere Anschlussstecker-Norm umgerüstet werden kann.

Der Adapterstecker weist mehrere fest in dem Adapterstecker verankerte Adapterkontakte auf, die beim Aufstecken des Adaptersteckers auf die Steckerbasis mit den korrespondierenden Basiskontakten zusammengesteckt werden müssen. Wenn die miteinander korrespondierenden Kontakte beim Aufstecken nicht exakt axial miteinander fluchten, ist das Zusammenstecken sehr erschwert. Ferner können die aufeinander treffenden Kontaktenden der Adapterkontakte und der korrespondierenden Basiskontakte bei schlechter Ausrichtung beim Zusammenstecken deformiert bzw. beschädigt werden. Wenn es sich bei den Kontakten um Ladestrom-Kontakte handelt, kann eine schlechte Kontaktierung wegen des relativ hohen ohmschen Widerstands zu starker Erwärmung bei hohen Ladeströmen führen.

Aus WO 2014/144990 A1 ist ein Elektrofahrzeug-Ladestecker gemäß dem Oberbegriff des Anspruchs 1 bekannt, der eine Steckerbasis und ein separates und austauschbares Interface aufweist, das an der Steckerbasis lösbar befestigt ist. Zur Vereinfachung der Zusammenführung eines neuen Interface an der Steckerbasis ist als Zwangs-Führungsmittel ein pyramidenartiger Kegel vorgesehen, der beim Zusammenstecken in einen korrespondierenden Einfädeltrichter eintaucht.

Aus CN 106532339 A ist ein Elektrofahrzeug-Ladestecker bekannt, bei dem an dem Interface zwei Laschenkörper vorhanden sind, die beim Zusammenstecken des Interface und der Steckerbasis eine lineare Führung übernehmen.

Aufgabe der Erfindung ist es demgegenüber, einen landseitigen Elektrofahrzeug-Ladestecker mit einfacher und zuverlässiger Austauschbarkeit der elektrischen Kontakte zu schaffen.

Diese Aufgabe wird erfindungsgemäß gelöst mit einem landseitigen Elektrofahrzeug-Ladestecker mit den Merkmalen des Anspruchs 1.

Der erfindungsgemäße landseitige Elektrofahrzeug-Ladestecker weist eine Steckerbasis und ein separates austauschbares Interface auf, das an der Steckerbasis befestigt ist, jedoch mit wenigen Handgriffen ausgetauscht werden kann. Die Steckerbasis weist mindestens einen elektrisch nicht-leitenden Basiskörper und mindestens einen Ladestrom-Basiskontakt auf, der an dem bzw. in dem Basiskörper befestigt ist. Der Ladestrom-Basiskontakt ist beispielsweise formschlüssig in dem Basiskörper vergossen.

Das Interface weist einen elektrisch nicht-leitenden Interfacekörper und mindestens einen in oder an dem Interfacekörper befestigten Ladestrom-Interfacekontakt auf. Der Ladestrom-Interfacekontakt ist im montierten Zustand des Interface mit dem korrespondierenden Ladestrom-Basiskontakt zusammengesteckt bzw. in diesen eingesteckt. Unter einem Ladestrom-Kontakt ist generell ein elektrisch leitender Kontaktkörper zu verstehen, über den der Ladestrom fließt, durch den die Traktionsbatterie des Elektrofahrzeugs aufgeladen wird.

Unter der proximalen Richtung ist vorliegend stets die der Ladesäule zugewandte Richtung zu verstehen, wohingegen unter der distalen Richtung die entgegengesetzte und dem fahrzeugseitigen Ladestecker zugewandte Richtung zu verstehen ist.

Die Steckerbasis und das Interface weisen Zwangs-Führungsmittel auf, die einen Einfädeltrichter bilden und die besonders bevorzugt beim Zusammenstecken des Interface und der Steckerbasis in einer Zwangsführungsebene eine initiale Winkelabweichung des Interface zu der Steckerbasis von mehr als 10° erlauben und final auf weniger als 5° reduzieren. Die Zwangsführungsmittel können auf vielfältige Weise an der Steckerbasis und dem Interface ausgebildet sein, und erlauben bei der Montage eines neuen und unverschlissenen Interface an der Steckerbasis, dass das Interface bezogen auf die Zwangsführungsebene zunächst mit einer gewissen rotatorischen Ungenauigkeit auf die Steckerbasis aufgesetzt werden kann. Der Einfädeltrichter sorgt dafür, dass die initiale tatsächliche Winkelabweichung final auf einen kleinen Winkel reduziert wird. Auf diese Weise wird die Montage eines neuen unverschlissenen Interface an der Steckerbasis erleichtert und eine Beschädigung insbesondere des Ladestrom-Basiskontakts bzw. der Ladestrom-Basiskontakte vermieden. Hierdurch wird schließlich auch eine hohe Reproduzierbarkeit selbst bei vielfachem Austausch des Interface sichergestellt und nach jedem Austausch ein niedriger Übergangswiderstand zwischen dem Ladestrom-Basiskontakt und dem korrespondierenden Ladestrom-Interfacekontakt sichergestellt.

Das Zwangs-Führungsmittel ist als Laschenkörper ausgebildet, der beim Zusammenstecken in eine korrespondierende Laschenführung eingreift. Die Zwangsführungsebene liegt dabei in der Grundebene des flächig ausgebildeten Laschenkörpers.

Gemäß einer bevorzugten Ausgestaltung ist das Zwangs-Führungsmittel derart ausgebildet, dass die Kontakt-Winkelabweichung zu dem Zeitpunkt, in dem der Ladestrom-Interfacekontakt und der Ladestrom-Basiskontakt beim Zusammenstecken miteinander elektrisch kontaktiert werden, weniger als 10° beträgt, besonders bevorzugt weniger als 5° beträgt. In dem Moment, in dem die beiden Ladestrom-Kontakte in mechanischen Kontakt miteinander kommen, ist also die Winkelabweichung so reduziert, dass die beiden Kontakte ineinander greifen und gleitend weiter zusammengeschoben werden können, aber nicht blockierend aufeinander stoßen.

Vorzugsweise ist, ergänzend zu dem Zwangs-Führungsmittel, ein Elastik-Führungsmittel vorgesehen, das derart ausgebildet ist, dass es in einer Federebene, die senkrecht zu der Zwangsführungsebene steht, einer initialen Winkelabweichung in der Federebene elastisch entgegenwirkt. Das Elastik-Führungsmittel kann derart ausgebildet sein, dass mit zunehmender Nähe des Interface zum Basiskörper die Federkraft in der Federebene derart zunimmt, dass es sich schließlich um eine Zwangsführung handelt, insbesondere in dem Moment, in dem die beiden miteinander korrespondierenden Ladestrom-Kontakte sich schließlich berühren und ineinander geschoben werden.

Vorzugsweise ist das Elastik-Führungsmittel als Laschenkörper ausgebildet, der von einer korrespondierenden Laschenführung geführt wird. Die Federebene ist dabei vorzugsweise senkrecht zu der Grundebene des Laschenkörpers orientiert. Die Laschenführung kann insbesondere als Führungsfläche ausgebildet sein, an der der Laschenkörper flächig anliegt.

Besonders bevorzugt sind als Führungsmittel zwei seitliche Laschenkörper vorgesehen, die einander ergänzend und/oder redundant wirken. Besonders bevorzugt definiert jeder der beiden Laschenkörper jeweils sowohl ein Elastik-Führungsmittel als auch ein Zwangs-Führungsmittel. Die beiden Laschenkörper können als Elastik-Führungsmittel antagonistisch miteinander zusammenwirken.

Der Laschenkörper bzw. die beiden Laschenkörper haben grundsätzlich eine zusätzliche stabilisierende Wirkung in Bezug auf seitliche Stöße auf das Interface, wie sie beispielsweise beim Aufschlagen des Ladesteckers auf den Boden auftreten können.

Gemäß einer bevorzugten Ausgestaltung verjüngt sich der Laschenkörper proximal, und verjüngt sich vorzugsweise in einer Einfach- oder Doppel-Evolvente. Die hiermit korrespondierenden Zwangs-Führungsmittel können ebenfalls entsprechend komplementär verjüngend ausgebildet sein. Hierdurch ergibt sich eine Zwangs-Führung, die initial eine relativ große Winkelkorrektur und final eine relativ kleine Winkelkorrektur erzwingt.

Vorzugsweise ist der Laschenkörper bzw. sind die beiden Laschenkörper dem Interface zugeordnet, wohingegen die korrespondierenden Zwangs-Führungsmittel in Form von Nuten und/oder Ausnehmungen der Steckerbasis zugeordnet sind.

Vorzugsweise ist ein Sicherungselement vorgesehen, durch das das Interface an der Steckerbasis fixiert ist. Das Sicherungselement kann werkzeuglos nicht geöffnet werden. Das Werkzeug kann beispielsweise ein Spezialwerkzeug sein, so dass ein unbefugtes Entfernen des Sicherungselements erschwert ist oder unmöglich gemacht wird. Ein derartiges Sicherungselement kann beispielsweise ein Schloss sein, das nur mit einem entsprechenden Schlüssel zu öffnen ist.

Im Folgenden wird ein Ausführungsbeispiel der Erfindung anhand der Zeichnungen näher erläutert. Es zeigen:
Figur 1 eine perspektivische Darstellung eines landseitigen Elektrofahrzeug-Ladesteckers mit einem an einer Steckerbasis montierten Interface,
Figur 2 den Elektrofahrzeug-Ladestecker der Figur 1 mit einem noch nicht montierten Interface beim Montagevorgang,
Figur 3 einen Querschnitt III - III des Elektrofahrzeug-Ladesteckers der Figur 1,
Figur 4 einen Längsschnitt des Elektrofahrzeug-Ladesteckers der Figur 1,
Figur 5 ein zweites Ausführungsbeispiel eines mit zwei parallelen Führungsstegen versehenen Interface-Laschenkörpers des Elektrofahrzeug-Ladesteckers der Figur 1, und
Figur 6 den Fahrzeugstecker der Figuren 1 bis 4 in einer initialen Steckposition beim Zusammenstecken des Interface und der Steckerbasis.

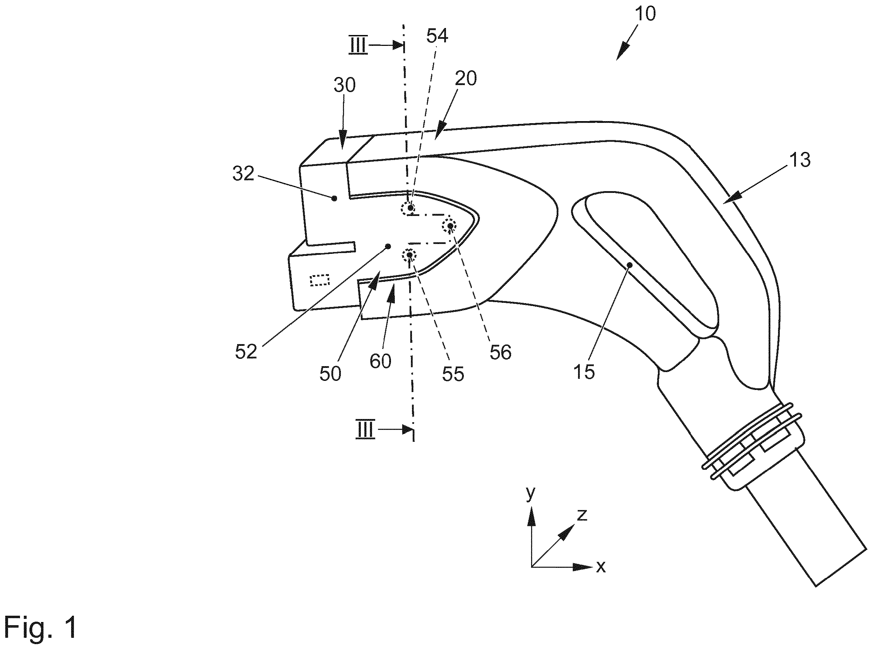

In den Figuren 1,3 und 4 ist ein zusammengebauter landseitiger Elektrofahrzeug-Ladestecker 10 dargestellt, der zum Einstecken in einen korrespondierenden fahrzeugseitigen Ladestecker (nicht dargestellt) geeignet ist, um eine Traktionsbatterie eines Elektrofahrzeugs aufzuladen. Der Ladestecker 10 weist einen Griffteil 13 auf, der von einem Griffteil-Gehäuse 16 gebildet ist und eine Grifföffnung 15 definiert, die von der Hand eines Bedieners ergriffen werden kann.

Am distalen Ende des Griffteil-Gehäuses 16 ist eine Steckerbasis 20 fest verankert. Die Steckerbasis 20 wird von einem elektrisch nicht-leitenden Kunststoff-Basiskörper 22, zwei in dem Basiskörper 22 fest verankerten Ladestrom-Basiskontakten 24 und zwei Signal-Basiskontakten 26 gebildet. Alle Basiskontakte 24,26 sind derart fest in dem Basiskörper 22 verankert, dass sie nicht ohne Beschädigung bzw. ohne Zerstörung des Basiskörpers 22 aus dem Basiskörper 22 entfernt werden können.

Die Steckerbasis 20 verbleibt über die gesamte Lebensdauer des Ladesteckers 10 an dem Griffteil-Gehäuse 16, ohne ausgetauscht zu werden. Die Ladestrom-Basiskontakte 24 sind über eine elektrische Ladeleitung 12 mit einer landseitigen Ladesäule (nicht dargestellt) elektrisch verbunden. Die Signal-Basiskontakte 26 sind jeweils über eine entsprechende Signalleitung 14 mit der landseitigen Ladesäule verbunden. Über die Ladeleitungen 12 werden Ladeströme von mehreren 100 A übertragen. Über die Signalleitungen 14 werden ausschließlich elektrische Signale übertragen.

An der Steckerbasis 20 ist ein separates entfernbares bzw. austauschbares Interface 30 befestigt, das im Feld einem relativ hohen mechanischen Verschleiß ausgesetzt ist. Das Interface 30 kann mit relativ wenig Aufwand bei Bedarf, beispielsweise im Rahmen einer regelmäßigen Wartung, ausgetauscht werden. Das Interface 30 weist einen elektrisch nicht-leitenden Kunststoff-Interfacekörper 32 auf, in dem zwei Ladestrom-Interfacekontakte 34 sowie zwei Signal-Interfacekontakte 36 fixiert bzw. formschlüssig eingegossen sind. Alle Kontakte 24,26,34,36 sind elektrisch leitend und bestehen jeweils aus einem hierfür geeigneten Metall.

Das Interface 30 bzw. der Interfacekörper 32 ist mit einem Sicherungselement 40 an der Steckerbasis 20 bzw. dem Basiskörper 22 fixiert. Das Sicherungselement 40 ist vorliegend eine Kopf-Gewindeschraube die in einer axialen gestuften Bohrung 38 des Interfacekörpers 32 tief versenkt eingesteckt ist, und die mit ihrem Gewindeschaft in eine korrespondierende Gewindebohrung 39 des Basiskörpers 22 eingeschraubt ist. Das Sicherungselement 40 weist einen Schraubenkopf auf, der mit einem entsprechenden Spezialwerkzeug formschlüssig kontaktiert werden kann, so dass das Sicherungselement 40 nur mit dem Spezialwerkzeug ein- bzw. ausgeschraubt werden kann.

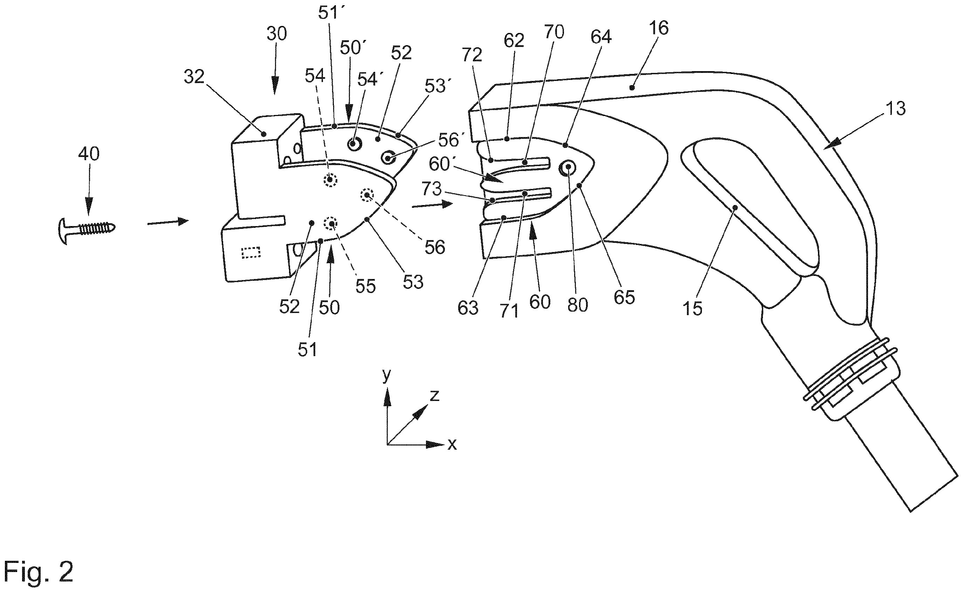

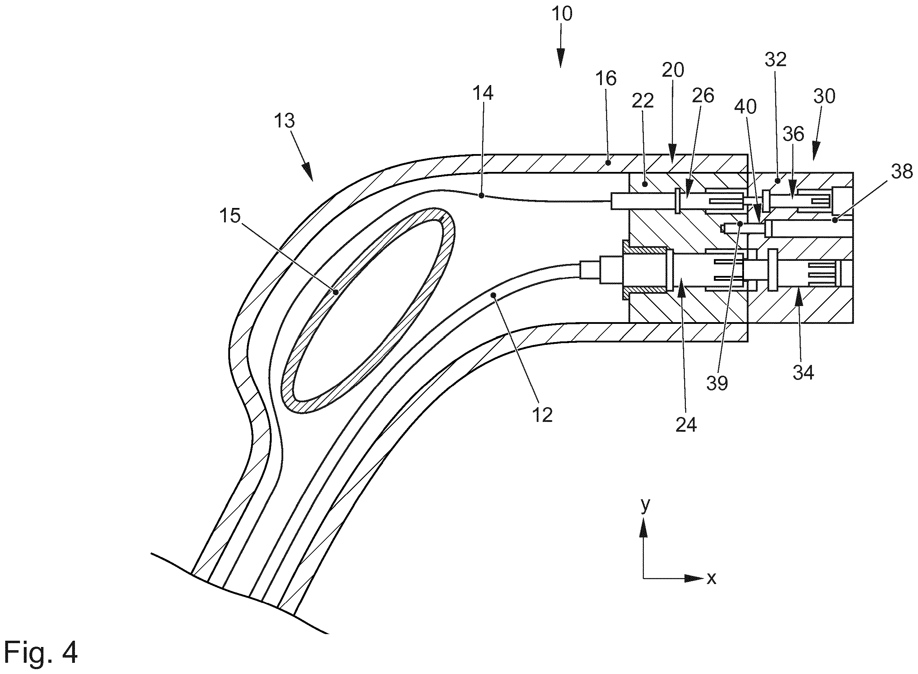

Die Steckerbasis 20 und das Interface 30 weisen Zwangs-Führungsmittel auf, die eine trichterförmige Ausbildung haben und die beim Aufstecken des Interface 30 auf die Steckerbasis 20, wie sie in der Figur 2 angedeutet ist, in einer Zwangsführungsebene X-Y, die der in der Figur 4 dargestellten Längsschnitt-Ebene entspricht, eine initiale Winkelabweichung von vorliegend mehr als 20° erlauben und final, wie in Figur 1 dargestellt, auf weniger als 5° reduzieren.

Das Interface 30 weist als vertikale Zwangs-Führungsmittel 50,50' zwei Laschenkörper 52,52' auf, die beispielsweise einstückig mit dem Interfacekörper 32 aus Kunststoff ausgebildet sein können. Die beiden Laschenkörper 52,52' definieren ferner auch laterale Elastik-Führungsmittel 50,50' und haben daher also eine Doppelfunktion.

Zu den Zwangs-Führungsmitteln zählen vorliegend mehrere Elemente, nämlich insbesondere die Laschenkörper-Ränder 51,51',53,53', die mit den korrespondierenden Rändern 62,63,64,65 einer jeweils als flache Ausnehmung 60' ausgebildeten korrespondierenden Laschenführung 60 zwangsführend zusammenwirken, sowie pro Laschenkörper 52 jeweils zwei Führungsnoppen 54,55,54', die mit zwei korrespondierenden Führungsnuten 70,71 in der flachen Ausnehmung 60' der Laschenführung 60 beim Zusammenbau zwangsführend zusammenwirken.

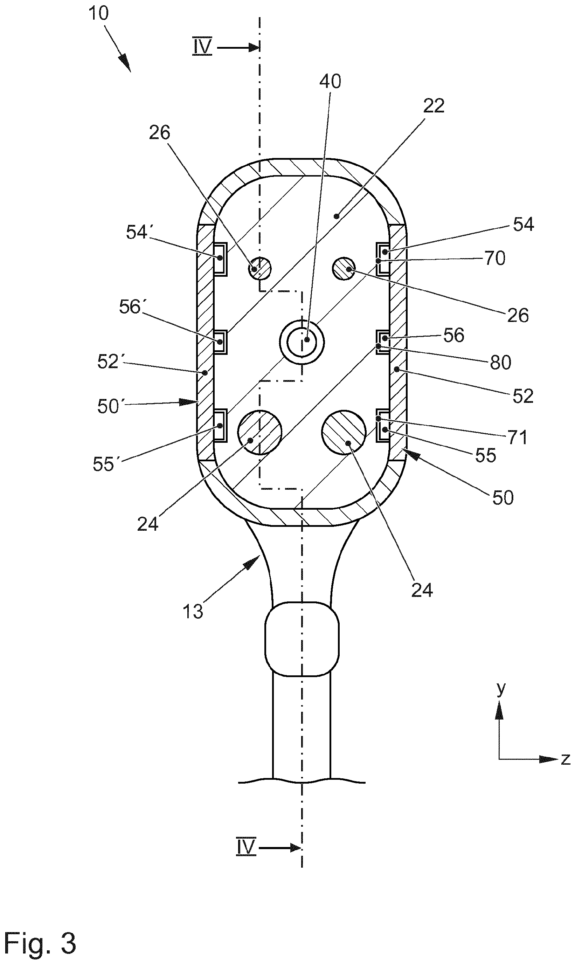

Im proximalen Endbereich der Ausnehmung 60' ist eine Rastbohrung 80 vorgesehen, in die eine korrespondierende Rastnoppe 56,56' an der Innenseite der Laschenkörper 52,52' in der Endmontageposition des Interface 30 einrastet, wie in Figur 3 erkennbar ist.

Die beiden Laschenkörper 52,52' sind nach proximal verjüngend ausgebildet, wobei die Verjüngung 53,53' jeweils als Doppel-Evolvente ausgebildet ist. Der proximale Endbereich 64,65 der flachen Ausnehmung 60' der Laschenführung 60 ist ebenfalls in Form einer Doppel-Evolvente verjüngend ausgebildet, so dass die beiden Laschenkörper 52,52' die korrespondierende Laschenführung-Ausnehmung 60' jeweils vollständig ausfüllen, wie in der Figur 1 dargestellt.

Nachdem ein verschlissenes Interface von der Steckerbasis 20 entfernt wurde, wird ein neues und unverschlissenes Interface 30 für die Montage an der Steckerbasis 20 bereitgehalten, wie in der Figur 2 dargestellt. Das Interface 30 wird von einer Montageperson zunächst ungefähr axial ausgerichtet mit der Steckerbasis 20, und wird dann axial auf die Steckerbasis 20 aufgeschoben. Hierbei sorgen die Zwangs-Führungsmittel dafür, dass die initiale Winkelabweichung in der Zwangsführungsebene X-Y kleiner als 25° ist. Die Laschenkörper 52,52'liegen auf der Grundfläche 61 in der Ausnehmung 60' auf, so dass sie auf diese Weise in einer Federebene Y-Z, die senkrecht zu der Zwangsführungsebene X-Y steht, einer initialen Winkelabweichung in der Federebene Y-Z elastisch entgegenwirken und mit der Steckerbasis 20 ausrichten. Durch die vorgenannten Zwangs-Führungsmittel wird bei der weiteren Montagebewegung die Winkelabweichung zwischen der Steckerbasis 20 und dem Interface 30 kontinuierlich verkleinert. Zu dem Zeitpunkt, in dem die Interfacekontakte 32,34 in Kontakt kommen mit den korrespondierenden Basiskontakten 22,24, beträgt die maximale Kontakt-Winkelabweichung nur noch wenige Grad, beispielsweise weniger als 5°.

In der in den Figuren 1 und 3 dargestellten Endmontage-Position rasten die beiden Rastnoppen 56,56' in die korrespondierenden Rastbohrungen 80 ein, so dass das Interface 30 provisorisch an der Steckerbasis 20 festgelegt ist. Anschließend wird das Sicherungselement 40 eingeschraubt und das Interface 30 auf diese Weise an der Steckerbasis 20 so fixiert, dass es ohne Spezialwerkzeug nicht entfernt werden kann.

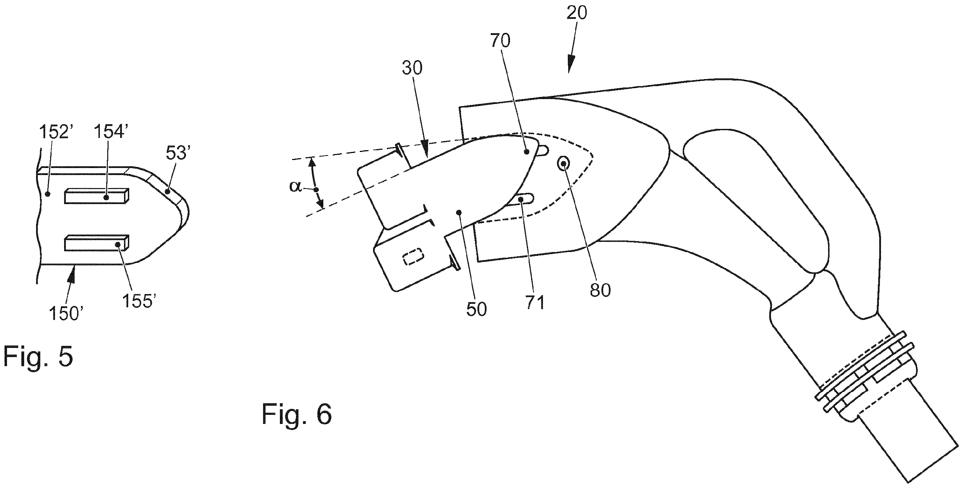

In der Figur 5 ist beispielhaft eine alternative Ausführungsform eines Laschenkörpers 152' des Führungsmittels 150' dargestellt, der anstelle von Führungsnoppen zwei zueinander parallele Führungsstege 154', 155' aufweist.

In der Figur 6 ist die initiale Winkelabweichung a beim initialen Zusammenstecken der Steckerbasis 20 mit dem Interface 30 dargestellt. Die initiale Winkelabweichung a beträgt vorliegend ca. 20°.

## Patentansprüche

1. Landseitiger Elektrofahrzeug-Ladestecker (10) mit einer Steckerbasis (20) und
einem separaten und austauschbaren Interface (30), das an der Steckerbasis (20) lösbar befestigt ist, wobei
die Steckerbasis (20) einen elektrisch nicht-leitenden Basiskörper (22) und mindestens einen Ladestrom-Basiskontakt (24) aufweist,
das Interface (30) einen elektrisch nicht-leitenden Interfacekörper (32) und mindestens einen Ladestrom-Interfacekontakt (34) aufweist, der mit dem korrespondierenden Ladestrom-Basiskontakt (24) zusammengesteckt ist,
und die Steckerbasis (20) und das Interface (30) Zwangs-Führungsmittel (50-65) aufweisen, die einen Einfädeltrichter (64,65,72,73) bilden,
**dadurch gekennzeichnet,**
**dass** das Zwangs-Führungsmittel als Laschenkörper (52,52') ausgebildet ist, der beim Zusammenstecken in eine korrespondierende Laschenführung (60) eingreift, wobei die Zwangsführungsebene (X-Y) in
der Grundebene des flächig ausgebildeten Laschenkörpers (52, 52') liegt.

2. Landseitiger Elektrofahrzeug-Ladestecker (10) nach Anspruch 1, wobei die Zwangs-Führungsmittel (59-65) derart zusammenwirken, dass beim Zusammenstecken eine initiale Winkelabweichung (a) von mehr als 10° möglich und final auf weniger als 5° reduziert ist.

3. Landseitiger Elektrofahrzeug-Ladestecker (10) nach einem der vorangegangenen Ansprüche, wobei mindestens ein Elastik-Führungsmittel (50,50') vorgesehen ist, das derart ausgebildet ist, dass es in einer Federebene Y-Z, die senkrecht zu der Zwangsführungsebene X-Y steht, einer initialen Winkelabweichung in der Federebene Y-Z elastisch entgegenwirkt.

4. Landseitiger Elektrofahrzeug-Ladestecker (10) nach Anspruch 3, wobei das Elastik-Führungsmittel (50,50') durch den Laschenkörper (52,52') gebildet ist, der von einer korrespondierenden Laschenführung (60) geführt wird.

5. Landseitiger Elektrofahrzeug-Ladestecker (10) nach einem der vorangegangenen Ansprüche 3 oder 4, wobei als Elastik-Führungsmittel (50,50') zwei der seitlichen Laschenkörper (52,52') vorgesehen sind.

6. Landseitiger Elektrofahrzeug-Ladestecker (10) nach einem der vorangegangenen Ansprüche, wobei die Zwangs-Führungsmittel (50-65) derart ausgebildet sind, dass die Kontakt-Winkelabweichung zu dem Zeitpunkt, in dem der Ladestrom-Interfacekontakt (34) und der Ladestrom-Basiskontakt (24) beim Zusammenstecken miteinander kontaktiert werden, weniger als 10° beträgt, besonders bevorzugt weniger als 5°.

7. Landseitiger Elektrofahrzeug-Ladestecker (10) nach einem der vorangegangenen Ansprüche, wobei der Laschenkörper (52,52') sich proximal verjüngt, vorzugsweise in einer Evolvente verjüngt.

8. Landseitiger Elektrofahrzeug-Ladestecker (10) nach einem der vorangegangenen Ansprüche, wobei der Laschenkörper (52,52') dem Interface (30) zugeordnet ist.

9. Landseitiger Elektrofahrzeug-Ladestecker (10) nach einem der vorangegangenen Ansprüche, wobei das Interface (30) an der Steckerbasis (20) durch ein Sicherungselement (40) fixiert ist, das werkzeuglos nicht geöffnet werden kann.

## Claims

1. Land-based electric vehicle charging plug (10) having a plug base (20) and a separate and interchangeable interface (30) which is detachably fixed to the plug base (20), wherein
the plug base (20) has an electrically nonconductive base body (22) and at least one charging current base contact (24),
the interface (30) has an electrically nonconductive interface body (32) and at least one charging current interface contact (34), which is plugged together with the corresponding charging current base contact (24),
and the plug base (20) and the interface (30) have positive guide means (50-65), which form an insertion funnel (64, 65, 72, 73),
**characterized**
**in that** the positive guide means is formed as a lug body (52, 52'), which engages in a corresponding lug guide (60) when they are plugged together,
wherein the positive guide plane (X-Y) lies in the base plane of the flat lug body (52, 52').

2. Land-based electric vehicle charging plug (10) according to Claim 1, wherein the positive guide means (59-65) cooperate in such a way that, as they are plugged together, an initial angular deviation (a) of more than 10° is possible and is finally reduced to less than 5°.

3. Land-based electric vehicle charging plug (10) according to one of the preceding claims, wherein at least one elastic guide means (50, 50') is provided, which is formed in such a way that, in a spring plane Y-Z which is perpendicular to the positive guide plane X-Y, it elastically counteracts an initial angular deviation in the spring plane Y-Z.

4. Land-based electric vehicle charging plug (10) according to Claim 3, wherein the elastic guide means (50, 50') is formed by the lug body (52, 52'), which is guided by a corresponding lug guide (60).

5. Land-based electric vehicle charging plug (10) according to one of the preceding Claims 3 or 4, wherein two of the lateral lug bodies (52, 52') are provided as elastic guide means (50, 50').

6. Land-based electric vehicle charging plug (10) according to one of the preceding claims, wherein the positive guide means (50-65) are formed in such a way that, at the time at which the charging current interface contact (34) and the charging current base contact (24) are contacted with each other as they are plugged together, the contact angular deviation is less than 10°, particularly preferably less than 5°.

7. Land-based electric vehicle charging plug (10) according to one of the preceding claims, wherein the lug body (52, 52') tapers proximally, preferably tapers in an involute.

8. Land-based electric vehicle charging plug (10) according to one of the preceding claims, wherein the lug body (52, 52') is assigned to the interface (30).

9. Land-based electric vehicle charging plug (10) according to one of the preceding claims, wherein the interface (30) is fixed to the plug base (20) by a securing element (40), which cannot be opened without tools.

## Revendications

1. Fiche terrestre (10) pour le chargement de véhicules électriques, comprenant une base de fiche (20) et une interface séparée et échangeable (30) qui est fixée de manière amovible à la base de fiche (20), dans laquelle
la base de fiche (20) présente un corps de base (22) électriquement non conducteur et au moins un contact de base de courant de charge (24),
l'interface (30) présente un corps d'interface (32) électriquement non conducteur et au moins un contact d'interface de courant de charge (34) qui est raccordé au contact de base de courant de charge (24) correspondant,
et la base de fiche (20) et l'interface (30) présentent des moyens de guidage forcé (50-65) qui constituent un entonnoir d'insertion (64, 65, 72, 73),
**caractérisée en ce que** le moyen de guidage forcé est réalisé sous la forme d'un corps de languette (52, 52') qui vient en prise avec un guidage de languette (60) correspondant lors du raccordement,
dans laquelle le plan de guidage forcé (X-Y) se situe dans le plan de base du corps de languette (52, 52') réalisé en nappe.

2. Fiche terrestre (10) pour le chargement de véhicules électriques selon la revendication 1, dans laquelle les moyens de guidage forcé (59-65) coopèrent de telle sorte que lors du raccordement, un écart angulaire initial (a) de plus de 10° est possible, et est finalement réduit à moins de 5°.

3. Fiche terrestre (10) pour le chargement de véhicules électriques selon l'une quelconque des revendications précédentes, dans laquelle au moins un moyen de guidage élastique (50, 50') est prévu qui est réalisé de telle sorte que dans un plan de ressort Y-Z, qui est perpendiculaire au plan de guidage forcé X-Y, il s'oppose de manière élastique à un écart angulaire initial dans le plan de ressort Y-Z.

4. Fiche terrestre (10) pour le chargement de véhicules électriques selon la revendication 3, dans laquelle le moyen de guidage élastique (50, 50') est formé par le corps de languette (52, 52') qui est guidé par un guidage de languette (60) correspondant.

5. Fiche terrestre (10) pour le chargement de véhicules électriques selon l'une quelconque des revendications précédentes 3 ou 4, dans laquelle deux des corps de languette latéraux (52, 52') sont prévus comme moyens de guidage élastique (50, 50').

6. Fiche terrestre (10) pour le chargement de véhicules électriques selon l'une quelconque des revendications précédentes, dans laquelle les moyens de guidage forcé (50-65) sont réalisés de telle sorte que l'écart angulaire de contact au moment où le contact d'interface de courant de charge (34) et le contact de base de courant de charge (24) sont mis en contact l'un avec l'autre lors du raccordement est inférieur à 10°, de manière particulièrement préférée inférieur à 5°.

7. Fiche terrestre (10) pour le chargement de véhicules électriques selon l'une quelconque .des revendications précédentes, dans laquelle le corps de languette (52, 52') se rétrécit de manière proximale, de préférence dans une développante.

8. Fiche terrestre (10) pour le chargement de véhicules électriques selon l'une quelconque des revendications précédentes, dans laquelle le corps de languette (52, 52') est associé à l'interface (30).

9. Fiche terrestre (10) pour le chargement de véhicules électriques selon l'une quelconque des revendications précédentes, dans laquelle l'interface (30) est fixée à la base de fiche (20) par un élément de blocage (40) qui ne peut pas être ouvert sans outil.
